Europäisches Patentamt

European Patent Office

Office européen des brevets

(11) Publication number: 0 392 752
A1

## (12) EUROPEAN PATENT APPLICATION

(21) Application number: 90303705.9

(51) Int. Cl.5: B60T 17/08

(22) Date of filing: 06.04.90

(30) Priority: 11.04.89 GB 8908069

(43) Date of publication of application:
17.10.90 Bulletin 90/42

(84) Designated Contracting States:
CH DE ES FR IT LI SE

(71) Applicant: WESTINGHOUSE BRAKE AND
SIGNAL HOLDINGS LIMITED
Pew Hill
Chippenham Wiltshire SN14 1JD(GB)

(72) Inventor: Griffin, Donald William
15 Laines Head
Chippenham, Wiltshire(GB)

(74) Representative: MacFarlane, John Anthony
Christopher et al
PAGE & CO Temple Gate House Temple
Gate
Bristol BS1 6PL(GB)

(54) Vehicle brake actuator.

(57) A vehicle brake actuator comprises a piston and cylinder arrangement (2/3) and a push rod (11) that is moved via a cam arrangement (6',6") by operation of the piston and cylinder arrangement to apply braking force at a brake shoe (12), the direction in which the piston (3) moves to move the push rod (11) being substantially at right angles to the direction in which the push rod (11) is moved. The cam arrangement (6',6") is pivotally mounted at (7) in a housing (1) of the actuator. The piston (3) is pivotally connected (at 5A) to the cam arrangement (6',6") and is tiltable in the cylinder (2). The push rod (11) is constrained by a support arrangement (10A) therefor to straight line movement in the housing (1), effected by movement of cam faces (8) of the cam arrangement (6',6") past force-receiving surfaces (9A) connected to the push rod (11). The cam arrangement (6',6") is pivoted about its mounting (at 7) in the housing (1) to effect the movement of the cam faces (8) by movement of the piston (3) in the cylinder (2) with the piston (3) tilting as it moves.

FIG.1.

EP 0 392 752 A1

# VEHICLE BRAKE ACTUATOR

This invention relates to vehicle brake actuators, in particular railway vehicle brake actuators.

European Patent Specification A1-0 185 208 discloses a vehicle brake actuator in which a fluid operated piston and cylinder arrangement moves a push rod to apply braking force at a brake shoe via an adjuster body which contains a mechanism for adjustment to compensate for friction material wear. The piston in moving in its axial direction in its cylinder moves in a straight line perpendicularly to the direction of movement of the push rod. The movement of the piston is transmitted to the push rod via a forked ram carried by the piston and having its legs extending on opposite sides of the push rod, each leg carrying a roller that engages a corresponding one of a pair of levers enclosing the push rod between them. Each lever is pivotally connected at one end by a first pivot pin to the housing of the actuator and is also pivotally connected to the push rod at a second pivot pin carried by the push rod. Each lever has a wedge cam face that is engaged by the corresponding roller carried by the forked ram. In operation, as the piston moves downwards the rollers act on the lever wedge cam faces to rotate the levers and hence move the piston rod to apply a braking force. Further rollers carried by the forked ram co-axially with the rollers engaged with the lever cam faces run on support faces carried by the actuator housing, these support faces thus taking the reaction forces and constraining all the rollers and hence also the piston to move in a straight line. On the other hand the push rod has a pendulum-like motion, carried as it is by the second pivot pins mentioned above which move along arcs centred on the first pivot pins also mentioned above. To provide for such pendulum-like motion places constraints on the design of the actuator. As the push rod follow this path and the rollers acting on the levers move vertically downwards the effective length of each lever increases so that the force applied to the piston rod is a function of piston stroke. This is undesirable. Also the arrangement of levers, support faces and rollers co-operating therewith is complicated and the moments set up by the co-operation with the rollers can lead to wear resulting in a need for more frequent maintenance.

According to the present invention there is provided a vehicle brake actuator comprising a piston and cylinder arrangement and a push rod that is moved via cam means by operation of the piston and cylinder arrangement to apply braking force at a brake, the direction in which the piston moves to move the push rod being substantially at right angles to the direction in which the push rod is moved, the cam means being pivotally mounted in a housing of the actuator; characterised in that the piston is pivotally connected to the cam means and is tiltable in the cylinder of the piston and cylinder arrangement, and the push rod is constrained by support means therefor to straight line movement in the actuator housing, effected by movement of a cam face of the cam means past a force-receiving surface connected to the push rod, the cam means being pivoted about its mounting in the housing to effect this movement of the cam face by movement of the piston in the cylinder with the piston tilting as it moves. This actuator is of simple construction, wear is minimised and the force available for effecting braking can be maximised. This force is determined by the cam face of the cam means and is not a function of the piston stroke.

For a better understanding of the invention and to show how the same may be carried into effect, reference will now be made by way of example, to the accompanying drawings, in which:-

Figure 1 is a cross-sectional side view of a vehicle brake actuator, and

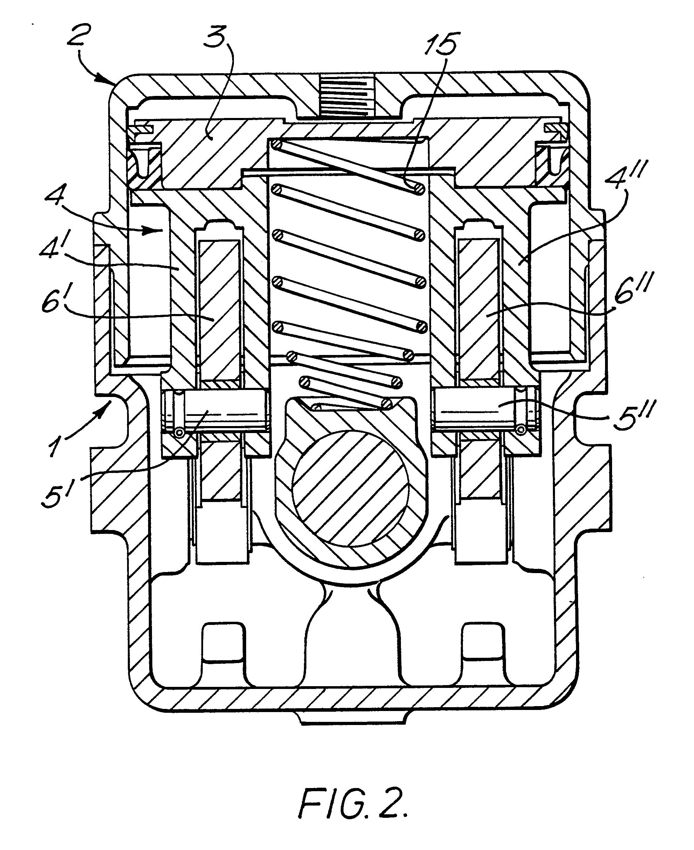

Figure 2 is cross-sectional end view of the actuator of Figure 1.

The vehicle brake actuator shown in the Figures has a housing 1 carrying a cylinder 2 in which there is a piston 3. The piston rod 4 of the piston 3 is in the form of a yoke each arm $4',4''$ of which is bifurcated. Within each arm there can freely move, pivoting about a pin $5'$ or $5''$ carried by the arm $4'$ or $4''$, a cam $6'$ or $6''$ that is pivotally mounted in the housing 1 at a fulcrum pin $7'$.

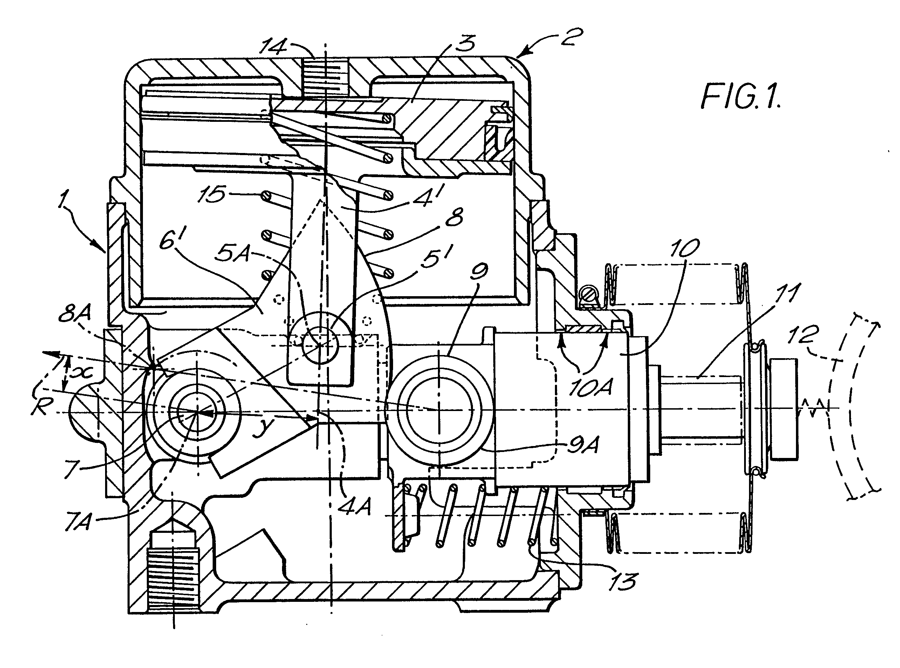

Cam faces 8 of the cams $6',6''$ bear on force-receiving surfaces 9A of a trunnion bearing arrangement 9 carried on the body 10 of a slack adjuster, an output push rod 11 of which is connected to a brake shoe 12. The slack adjuster is of the type described in British Patent Applications Nos. 8901565.5 and 8901567.1 and accordingly the slack adjuster body 10 is supported by a support arrangement 10A for a straight line movement in the housing 1. The slack adjuster acts to compensate for wear of friction material at the brake shoe 12. The body 10 of the slack adjuster is urged to the left in Figure 1 by return springs 13 to ensure contact between the trunnion bearing arrangement surfaces 9A and the cam faces 8.

Downward movement of the piston 3 to apply the brake is effected by air pressure applied via a connection 14. The piston moves against the action of a return spring 15.

When air pressure is applied at the connection 14 the piston 3 is moved down causing the cams $6', 6''$ to pivot about the fulcrum pin 7, the cams pivoting in a clockwise direction as viewed in Figure 1. To accommodate this movement the piston 3 is tiltable in the cylinder 2, and the piston tilts as it moves down the cylinder 2. As the cam faces 8 ride over the trunnion bearing arrangement surfaces 9A they move the slack adjuster body 10, and hence the push rod 11, to the right, at first taking up clearance at the brake and then applying the brake.

It is to be noted that the cams $6', 6''$ move together and act as a single cam on the trunnion bearing arrangement 9. The force which the piston 3 exerts on this cam is not effected by the stroke of the piston as the axis 5A of the pins $5', 5''$ is at a fixed distance from the axis 7A of the fulcrum pin 7. It is the cam profile which modifies the force which the piston 3 applies to the push rod 11. The effect of the cam profile can be in two stages, for example a low effect, 1:1 or less, in a first stage and a high effect, 2:1 or above, in a second stage. During the first stage clearance take-up is effected whilst during the second stage brake-application is effected. A two stage effect is advantageous in that the required movement of the piston can be minimised and thus the volume of compressed air required to effect brake application can be minimised.

Typically the vehicle is a railway vehicle.

It is to be noted that the cam faces 8 are curved and by way of example follow part of a circle having its centre 8A offset from the axis 7A of the fulcrum pin 7. As brake application is effected the reaction force R between the trunnion bearing arrangement surfaces 9A and the cam faces 8 passes through the centre 8A. The moment on the cams is Rx where x is the perpendicular distance of the line of the reaction force R from the fulcrum pin axis 7A. The torque which opposes this moment is Wy where W is the force exerted on the piston 3 by the applied air pressure and y is the perpendicular distance between the piston rod axis 4A and the fulcrum pin axis 7A. The axis 5A of the pins $5', 5''$ by which the piston rod is connected to the cams is located in the centre of the projected pressure-receiving area of the piston and hence no moment is transmitted from the cams to the piston to cause side loads which could accelerate the rate of wear at the piston/cylinder interfaces.

## Claims

1. A vehicle brake actuator comprising a piston and cylinder arrangement (2/3) and a push rod (11) that is moved via cam means ($6', 6''$) by operation of the piston and cylinder arrangement to apply braking force at a brake (12), the direction in which the piston (3) moves to move the push rod (11) being substantially at right angles to the direction in which the push rod (11) is moved, the cam means ($6', 6''$) being pivotally mounted in a housing (1) of the actuator; characterised in that the piston (3) is pivotally connected to the cam means ($6', 6''$) and is tiltable in the cylinder (2) of the piston and cylinder arrangement (2/3), and the push rod (11) is constrained by support means (10A) therefor to straight line movement in the actuator housing (1), effected by movement of a cam face (8) of the cam means ($6', 6''$) past a force-receiving surface (9A) connected to the push rod (11), the cam means ($6', 6''$) being pivoted about its mounting (7) in the housing (1) to effect this movement of the cam face (8) by movement of the piston (3) in the cylinder (2) with the piston (3) tilting as it moves.

2. A vehicle brake actuator as claimed in claim 1, wherein the profile of the cam means ($6', 6''$) is such as to modify the force which the piston and cylinder arrangement (2/3) applies to the push rod (11) in two stages, there being a low modifying effect during a first stage of operation of the piston and cylinder arrangement (2/3) and a high modifying effect thereafter during a second stage of operation.

3. A vehicle brake cylinder as claimed in claim 2, wherein said low modifying effect is 1:1 or less and wherein said high modifying effect is 2:1 or above.

4. A vehicle brake actuator as claimed in claim 1, 2 or 3, wherein said force-receiving surface (9A) is a surface of a trunnion bearing arrangement (9) that is connected to the push rod (11).

5. A vehicle brake actuator as claimed in claim 4, wherein the cam profile is part of a circle the centre (8A) of which is offset from the axis (7A) about which the cam means ($6', 6''$) pivots in the housing (1) and through which centre (8A) passes the reaction force between the trunnion bearing arrangement (9) and the cam profile during brake application, and wherein the axis (5A) of the pivotal connection between the piston (3) and the cam means ($6', 6''$) is located centrally of the projected pressure-receiving area of the piston (3).

6. A vehicle brake actuator as claimed in any one of the preceding claims, wherein the cam means is a two part cam ($6', 6''$) and the piston (3) has a piston rod (4) in the form of a yoke, each arm ($4', 4''$) of which is pivotally connected to a respective part of the cam means ($6', 6''$).

7. A vehicle brake actuator as claimed in claim 6, wherein each arm ($4', 4''$) of the piston rod (4) is bifurcated and each cam part ($6', 6''$) moves within its respective arm ($4', 4''$).

FIG.1.

EP 0 392 752 A1

FIG. 2.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | DE-B-2 730 959 (KNORR-BREMSE) <br> * column 2, lines 36-46; column 4, lines 57-67; figure 2 * | 1 | B 60 T 17/08 |
| X | | 2,4 | |
| Y | DE-A-3 812 854 (SLOAN VALVE CO.) <br> * figure 2 * | 1 | |
| X | DE-B-2 659 768 (KNORR-BREMSE) <br> * column 6, lines 56 - column 7, line 28; figure 3 * | 2 | |
| D,A | EP-A-0 185 208 (KNORR-BREMSE) <br> * figure 2 * | 6,7 | |

TECHNICAL FIELDS SEARCHED (Int. Cl.5)

B 60 T

The present search report has been drawn up for all claims

| Place of search | Date of completion of the search | Examiner |
|---|---|---|
| BERLIN | 13-07-1990 | LUDWIG H J |

EPO FORM 1503 03.82 (P0401)